(19) Europäisches Patentamt
European Patent Office
Office européen des brevets

(11) **EP 2 151 999 A1**

(12) **EUROPEAN PATENT APPLICATION**

(43) Date of publication:
**10.02.2010 Bulletin 2010/06**

(51) Int Cl.:
*H04N 7/16* (2006.01)    *H04N 5/00* (2006.01)

(21) Application number: **08305454.4**

(22) Date of filing: **06.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **THOMSON Licensing**
**92100 Boulogne-Billancourt (FR)**

(72) Inventor: **Diehl, Eric**
**35340, Liffre (FR)**

(74) Representative: **Ruellan-Lemonnier, Brigitte et al**
**Thomson**
**European Patent Operations**
**46 Quai Alphonse Le Gallo**
**92648 Boulogne Cedex (FR)**

(54) **Method and device for accessing content data**

(57) A device having simultaneous access to at least two implementations of a first function, each implementation of the first function being identified by an implementation identifier i, receives protected content data m', modified auxiliary data k', and an implementation identifier i. The device then generates auxiliary data k, using the implementation of the first function corresponding to the implementation identifier i with the modified auxiliary data k' as input; and generates content data m, using a second function with the auxiliary data k and the protected content data m' as input. The two functions may also be implemented as a single function. By using different implementations, it can be possible for system operators to update the system by modifying the implementations (rather than the entire system) so as to combat hacking of the system. Also provided is a method and a system.

Figure 5

**Description**

FIELD OF THE INVENTION

The present invention relates generally to software, and in particular to secure software.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

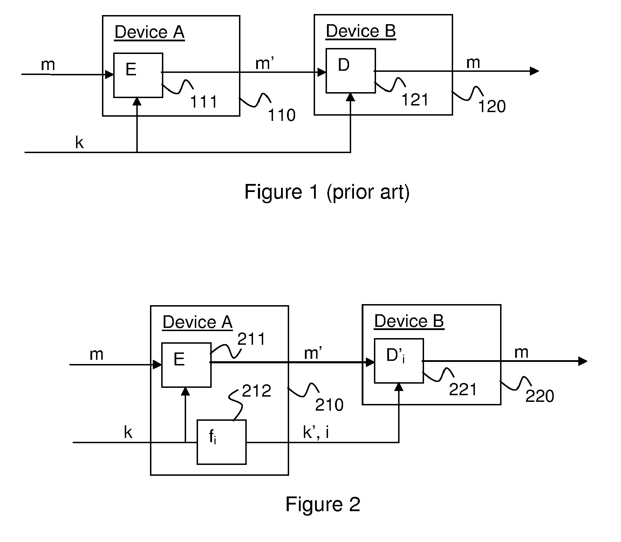

Many, if not most, of today's secure systems - e.g. digital pay television systems and digital rights management (DRM) systems - are at least partly implemented in software. Figure 1 illustrates a scheme that is commonly used for data protection in such systems. Device A 110 is to send data m to device B 120 in a protected manner. Device A uses a function E 111 and ancillary data k to generate protected data m'; m'=E(m,k). Device B has access to ancillary data k and may use it and function D 121 to generate data m from protected data m'; m=D(m',k).

Function E is often an encryption function and the ancillary data k an encryption key, while the function D in that case is a corresponding decryption function. If the encryption algorithm is symmetric, then k is the same at both ends. However, if the encryption algorithm is asymmetric, then a secret, private key is used to encrypt the data, while a different, corresponding public key is used for the decryption (or the other way around).

The software that is used in these systems is sometimes at least partly housed in tamper resistant hardware, such as dedicated cryptographic processors or smartcards. However, this is not always the case, in particular when the software may be run on an ordinary personal computer.

Software that is intended to be - or may be - executed on an ordinary computer is therefore often developed using techniques to increase the tamper resistance of the software, but this has only limited resistance against determined attackers, who may use various means to 'crack' the system.

Once a system has been cracked, it may be necessary to take counter-measures in order to renew it, in an attempt to make it secure again. Most of today's renewability strategies are based on renewing the entire system. It will be appreciated that this is a solution that leaves something to be wanted; for example, it is often very expensive in money and time.

It can therefore be appreciated that there is a need for an improved solution that improves the secure software and makes renewal easier than in the present art. This invention provides such a solution.

SUMMARY OF THE INVENTION

In a first aspect, the invention is directed to a method of accessing content data. The method is performed by a device having simultaneous access to at least two implementations of a function, each implementation of the function being identified by an implementation identifier i. The device receives protected content data m', modified auxiliary data k' and an implementation identifier i. Content data m is generated using the implementation of the function corresponding to the implementation identifier i with the modified auxiliary data k' and the protected content data m' as input.

In a first preferred embodiment, the auxiliary data k is a decryption key and the function is a decryption function.

In a second preferred embodiment, a further implementation of the function is downloaded and installed if the device does not have access to the implementation corresponding to the implementation identifier i. It is advantageous that the further implementation of the function is installed so that the device still has access to at least one of the at least two accessible implementations.

In a third preferred embodiment, the modified auxiliary data k' and the implementation identifier i are received together in a license L.

In a second aspect, the invention is directed to a device for accessing content data. The device has simultaneous access to at least two implementations of a function, each implementation of the function being identified by an implementation identifier i. The device comprises means for receiving protected content data m', modified auxiliary data k', and an implementation identifier i; and means for generating content data m, using the implementation of the function corresponding to the implementation identifier i with the modified auxiliary data k' and the protected content data m' as input.

In a first preferred embodiment, the device further comprises means for downloading and installing a further implementation of the function. It is advantageous that the means for downloading and installing are adapted to download a further implementation of the function upon determination that the device does not have access to the implementation corresponding to the received implementation identifier i.

In a third aspect, the invention is directed to a system for content data protection. The system comprises a reception device having simultaneous access to at least two implementations of a function, each implementation of the function being identified by an implementation identifier i. The reception device further comprises means for receiving protected content data m', modified auxiliary data k', and an implementation identifier i. The reception device further comprises means for generating content data m, using the implementation of the function corresponding to the implementation identifier i with the modified auxiliary data k' and the protected content data m' as input. The system further comprises a transmission device that comprises means for scrambling content data m to generate protected content data m', using auxiliary data k; means for modifying the auxiliary data k to generate modified auxiliary data k', using a modification function and the implementation identifier i; and means for transmitting to the reception device the protected content data m', the modified auxiliary data k', and the implementation identifier i.

## BRIEF DESCRIPTION OF THE DRAWINGS

Preferred features of the present invention will now be described, by way of non-limiting example, with reference to the accompanying drawings, in which:

Figure 1, already discussed, illustrates an exemplary Digital Rights Management system of the prior art;
Figure 2 illustrates a digital rights management system according to a preferred embodiment of the present invention;
Figure 3 illustrates in more detail the emitter side of a backward compatible digital rights management system according to a preferred embodiment of the invention;
Figure 4 illustrates in more detail the receiver side of a backward compatible digital rights management system according to a preferred embodiment of the invention; and
Figure 5 illustrates another view of a digital rights management system according to a preferred embodiment of the present invention.

In the Figures, the represented blocks are purely functional entities, which do not necessarily correspond to physically separate entities. These functional entities may be implemented as hardware, software, or a combination of software and hardware; furthermore, they may be implemented in one or more integrated circuits.

## PREFERRED EMBODIMENT OF THE INVENTION

The invention makes use of the fact that it is often not the system itself that is broken, but its implementation. An implementation may be defined as a certain way of performing a specific function. For example, in order to calculate $\sum_{i=0}^{n-1} 2^i$ , a first implementation simply computes $2^0+2^1+2^2+...+2^{n-1}$, while a second, more efficient, implementation computes $2^n-1$. The two implementations give the same result, but the road taken to get to the destination is different. It should be noted that the input to two different implementations is not necessarily exactly the same in form; e.g. one implementation may use n as input (the number of squares), while another implementation may use n-1.

The invention is also based on the fact that it is possible to use different implementations of a function to arrive at the same result. This makes it possible to renew the implementation of the system, rather than the system itself.

Using the invention, it is possible to enforce the use of a new implementation at a given time t. The skilled person will appreciate that this scheme will make it more difficult for hackers to 'crack' the system, since, as previously mentioned, they often attack a specific implementation and not the system itself. By changing implementations a plurality of times during the lifetime of a product or system, it is possible to force hackers to work quickly if they want to 'crack' an implementation before it is changed. Even if a hacker does crack the implementation, it will usually be of limited value, as the implementation is likely to change relatively soon.

Figure 2 illustrates a digital rights management system according to a preferred embodiment of the present invention. As in Figure 1, a first device A 210 receives a content m and auxiliary data k. A first function E 210 generates a protected content m' using the received content m and the auxiliary data k; m'=E(m,k). However, in addition to the system described in Figure 1, device A also comprises a unit 212 adapted to perform implementation enforcer function $f_i$ that, for a given implementation i generates modified auxiliary data k'; $k' = f_i(k)$. Device A then sends the protected content m', the modified auxiliary data k', and the implementation identifier i to device B 220. It should be noted that it is advantageous, but not necessary, to send k' and i together; they may be sent separately and even using different distribution paths.

Device B receives the protected content m', the modified auxiliary data k', and the implementation identifier i. If device B does not possess (or generate) the implementation corresponding to the implementation identifier, then it cannot access the protected content m'. On the other hand, if device B does possess the necessary implementation, then it also possesses function $D'_i$; $D'_i(x,y)=D(x, f_i^{-1}(y))$.

Using the function $D'_i$, device B is able to use k' and m' to restore the content $m=D'_i(m',k')=D(m', f_i^{-1}(k'))= D(m',k)$.

In a preferred embodiment, device B may, after successful authentication, download a new implementation. This may for example be done when such an implementation is needed.

The person skilled in the art will appreciate that it is possible to conceive a system with backward compatibility, i.e. an implementation i that uses function $f_i$, also knows (or is able to calculate) the functions of previous implementations $f_{i-1}... f_2, f_1$. In this case, it is recommended that it is not possible to generate future implementations, as this could compromise the entire system.

As a variant, the backward compatibility is not total, i.e. a device may store (or be able to calculate) a limited number of previous implementations.

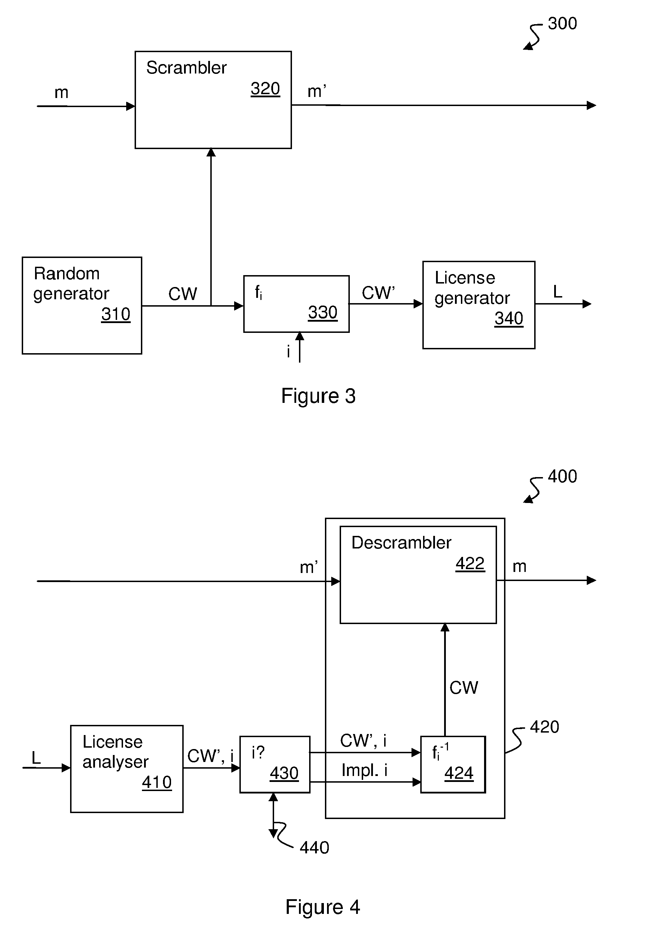

Figure 3 illustrates in more detail the emitter side 300 of a backward compatible digital rights management system according to a preferred embodiment of the invention. The emitter side 300 comprises a random generator 310 that preferably is as close as possible to a true random generator. The random generator 310 is adapted to output at least one control word CW that is received by a scrambler 320 and a unit 330 adapted to perform an implementation enforcer function $f_i$.

The scrambler 320 is adapted to receive a content item m and to scramble it using the code word CW, preferably using Advanced Encryption Standard (AES), and output the thus scrambled content m'. The implementation enforcer function unit 330 calculates a protected code word CW' using the implementation enforcer function $f_i$ that corresponds to a given implementation identifier i. The protected code word CW' is then used by a license generation unit 340 to create a license L that further comprises the implementation identifier i. The license L may then be sent toward the receiver, preferably protected in some way that is beyond the scope of this invention.

It will be appreciated that the scrambling unit 320 and the license generator 340 are independent of the implementation versions and that these units thus may remain unaffected by the invention. In particular, for the license generator 340, the implementation identifier i is preferably treated as any kind of auxiliary data, as there is no need for the license generator 340 to be aware of its importance.

The exemplary system of Figure 3 is designed for 100 implementations. In order to generate these 100 implementations, the following suite is first calculated based on a random seed:

$$F_{100} = \text{random seed}$$

$$F_{99} = \text{SHA-1(random seed)}$$

$$F_{98} = \text{SHA-1}(F_{99})$$

$$\ldots$$

$$F_n = \text{SHA-1}(F_{n+1})$$

$$\ldots$$

$$F_1 = \text{SHA-1}(F_2)$$

wherein the random seed is a 160-bit random number, and SHA-1 is Secure Hash Algorithm 1, a cryptographic hash function well known in the art.

Then, for an implementation i, the implementation enforcer function $f_i$ may then be calculated as $f_i(x) = MSB_{0\ldots127}(F_i) \otimes x$, wherein x is a 128-bit number (in the exemplary system, a 128-bit code word for the AES scrambler 320) and $MSB_{0\ldots127}$ is a function that returns the 128 most significant bits of a number.

Figure 4 illustrates in more detail the receiver side 400 of a backward compatible digital rights management system according to a preferred embodiment of the invention. The receiver side 400 comprises a license analysis unit 410 and a unit 420 for executing a secure implementation of a decryption function. The execution unit 420 comprises, as functional units, a descrambler 422 and an implementation function 424.

The license analyser 410 is adapted to receive a license L, to remove any protection, if necessary, and to deliver a protected code word CW' and an implementation identifier i to the execution unit 420. The implementation function 424 is adapted to (re-)generate the code word CW (that was protected at the emitter side 300) using the protected code word CW', the implementation identifier i, and the corresponding value $F_i$ (assuming that this is accessible). It should be noted that the value $F_i$ enables calculation of all previous values (as the system is backward compatible). For example:

for implementation i: $cw = MSB_{0\ldots127}(F_i) \otimes cw'$
for implementation i-1: $cw = MSB_{0\ldots127}(\text{SHA-1}(F_i)) \otimes cw'$
for implementation i-2: $cw = MSB_{0\ldots127}(\text{SHA-1}(\text{SHA-1}(F_i))) \otimes cw'$

On the other hand, values for implementations greater than i cannot be calculated.

Using the code word CW, the descrambler 422 may then descramble received scrambled content m' for which a license has been received and correctly processed.

In Figure 2, the descrambler 422 and the implementation function 424 have been illustrated as separate entities for illustration purposes, but it will be appreciated that it is possible, and at least in some embodiments even preferred, that they are tightly interwoven in a single set of software code (or in a single hardware unit.)

In a preferred embodiment, the receiver side 400 also comprises a unit 430 for verifying if the execution unit 420 stores, or is able to generate, the correct implementation. This is advantageously done by comparing the received implementation identifier i with implementation identifiers stored by the verification unit 430. In case the correct implementation is available, the verification unit 430 forwards the code word CW and the implementation identifier i to the execution unit 420.

However, if the correct implementation is not available, then the verification unit 430 is adapted to obtain the implementation that corresponds to the implementation identifier i, for example by connecting a server (not shown) over a connection 440, and to forward implementation i to the execution unit 420. The new implementation is then installed and used to generate a code word CW from the encrypted code word CW' so that the scrambled content m' may be descrambled.

It will be appreciated that the license analyser 410 is unaffected by any implementations. However, the secure implementation may have to be changed following commands from the emitter side (or when it is discovered that the receiver side does not support a certain implementation or at preprogrammed times). As mentioned, the system of the example is backwards compatible, which means that a newer implementation is able to handle content produced according to older implementations.

The receiver side 400 is adapted to change the secure implementation, in response to a command or upon determining that it does not have the necessary implementation. In the preferred embodiment, a new implementation comprises a new value $F_{i+1}$, thus enabling calculation of former values of F, and a new version of the implementation function 424, or the descrambler 422, or new versions of both the implementation function 424 and the descrambler 422. It is advantageous that the new version or versions are protected in some way so as to be resistant to hacking. An example of such protection is obfuscation. In other words, the new version or versions have generally the same functions as previous versions, but they have not been written in the same way.

A new implementation may either be stored at the receiver side or may be downloaded, e.g. from a remote server.

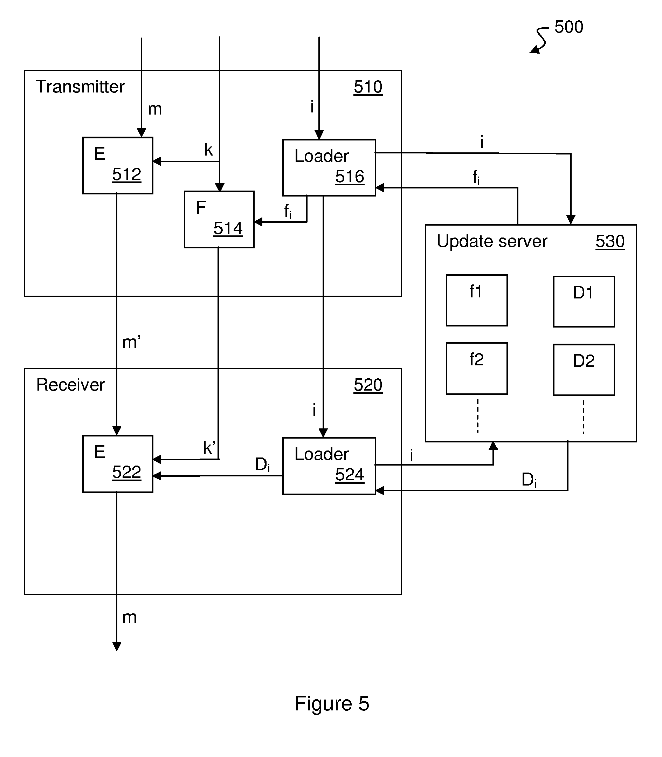

Figure 5 illustrates another view of a digital rights management system according to a preferred embodiment of the present invention. The system 500 comprises a transmitter 510, a receiver 520 and an update server 530. The transmitter 510 is adapted to receive content m, at least one key word k, and an implementation identifier i. In the transmitter 510, a loader 516 receives the implementation identifier i and verifies if the transmitter 510 implements a function $f_i$ that corresponds to the implementation identifier i. If this is not the case, then the loader 516 requests and receives function $f_i$ from the download server 530. The received function $f_i$ is then installed and executed by function block F 514 that encrypts the at least one control word k to obtain at least one encrypted control word k'. On the other hand, if the transmitter 510 already implements the function $f_i$, then the loader 516 provides information about the implementation to use to the function block F 514. The transmitter 510 also comprises a scrambler 512 adapted to scramble the content m with the at least one control word k. Finally, the scrambled content m', the encrypted control word k' and the implementation identifier i are transmitted to the receiver 520.

The receiver 520 comprises a loader 524 and a descrambler 522. The loader 524 is adapted to receive the implementation identifier i and verify if the receiver 520 implements the decryption function $f_i^{-1}$. If this is not the case, then the loader 524 requests and receives an implementation $D_i$ from the download server 530. The implementation $D_i$ is a software implementation of $D(m, f_i^{-1}(k'))$, i.e. The received implementation $D_i$ is then installed so as to enable descrambling of m' using k' to restore the content m. As for the transmitter 510, if the required implementation i is implemented, the loader 524 is adapted to forward the implementation identifier i to the descrambler 522.

It will be appreciated that the different implementations of the algorithm D preferably are implemented in different ways. For example, the decryption key may be located in a different place and the obfuscation may be different. As already mentioned, the goal of the present invention is to enable update of the implementation of the system in order to thwart hacking, while the major parts of the system itself remains unmodified, as will be evidenced by the fact that the encryption function E is independent of the implementation and only needs the content m and the at least one code word k to generate the scrambled content m' that, too, is independent of the version.

It is important to note that the present system is not equivalent to merely changing the encryption/decryption keys. Nor is it equivalent to merely changing the key for the encryption of the code words. The code words are decrypted in a new manner using a new implementation that is needed by the receiver. On the other hand, the system avoids having to update the entire system - e.g. the scrambler and descrambler may remain untouched upon a change to a new implementation.

It will thus be appreciated that the present invention provides a copy protection system that can be more resistant to hacking than the prior art solutions, as it can be possible to make small upgrades of implementations of the system, particularly the receiver, (without having to modify the entire system) from time to time, wherein each upgrade is preferably protected in a different way than previous implementations.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

**Claims**

1. A method of accessing content data, the method comprising the steps, at a device having simultaneous access to at least two implementations of a function, each implementation of the function being identified by an implementation identifier i, of:

- receiving:

protected content data m';
modified auxiliary data k'; and
an implementation identifier i; and

- generating content data m, using the implementation of the function corresponding to the implementation identifier i with the modified auxiliary data k' and the protected content data m' as input.

2. The method of claim 1, wherein the auxiliary data k is a decryption key and the function is a decryption function.

3. The method of claim 1, further comprising the steps of:

- downloading a further implementation of the function if the device does not have access to the implementation corresponding to the implementation identifier i; and
- installing the further implementation of the function.

4. The method of claim 3, wherein the further implementation of the function is installed so that the device still has access to at least one of the at least two accessible implementations.

5. The method of claim 1, wherein the modified auxiliary data k' and the implementation identifier i are received together in a license L.

6. A device (400) for accessing content data, the device having simultaneous access to at least two implementations of a function, each implementation of the function being identified by an implementation identifier i, the device (400) comprising:

- means (410; 422) for receiving:

protected content data m';
modified auxiliary data k'; and
an implementation identifier i; and

- means (422) for generating content data m, using the implementation of the function corresponding to the implementation identifier i with the modified auxiliary data k' and the protected content data m' as input.

7. The device of claim 6 further comprising means (524) for downloading and installing a further implementation of the function.

8. The device of claim 7, wherein the means (524) for downloading and installing are adapted to download a further implementation of the function upon determination that the device does not have access to the implementation corresponding to the received implementation identifier i.

9. A system for content data protection, the system comprising:

a reception device (220; 400; 520) having simultaneous access to at least two implementations of a function, each implementation of the function being identified by an implementation identifier i, the reception device further comprising:

means (221; 410, 422; 522, 524) for receiving:

protected content data m';
modified auxiliary data k'; and
an implementation identifier i; and

means (221; 422; 522) for generating content data m, using the implementation of the function corresponding to the implementation identifier i with the modified auxiliary data k' and the protected content data m' as input; and

a transmission device (210; 300; 510) comprising:

means (211; 320; 512) for scrambling content data m to generate protected content data m', using auxiliary data k;
means (212; 330; 514) for modifying the auxiliary data k to generate modified auxiliary data k', using a modification function and the implementation identifier i; and
means (211, 212; 320, 340; 512, 514) for transmitting to the reception device (220; 400; 520) the protected content data m', the modified auxiliary data k', and the implementation identifier i.

Figure 1 (prior art)

Figure 2

Figure 3

Figure 4

Figure 5

Europäisches
Patentamt

European
Patent Office

Office européen
des brevets

## EUROPEAN SEARCH REPORT

**Application Number**

EP 08 30 5454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 683 614 A (SCIENTIFIC ATLANTA [US]) 22 November 1995 (1995-11-22) * page 2, line 33 - line 38 * * page 3, line 11 - line 23 * * page 5, line 9 - line 25 * * page 11, line 24 - line 30 * * page 12, line 16 - line 26 * * page 14, line 10 - line 19 * | 1,2,6,7, 9 | INV. H04N7/16 H04N5/00 |
| Y | * figures 5,7 * | 3-5,8 | |
| Y | EP 1 370 083 A (MATSUSHITA ELECTRIC IND CO LTD [JP] PANASONIC CORP [JP]) 10 December 2003 (2003-12-10) * abstract * * page 2, line 30 - page 3, line 13 * * page 4, line 8 - line 20 * * page 4, line 38 - line 46 * * page 6, line 13 - page 7, line 12 * * page 8, line 53 - page 9, line 5 * | 3-5,8 | |
| A | * figures 2,3,5 * | 1,2,6,7, 9 | |
| | | | TECHNICAL FIELDS SEARCHED (IPC) |
| A | US 2004/054892 A1 (JI MING [SG] ET AL JI MING [SG] ET AL) 18 March 2004 (2004-03-18) * paragraph [0003] * * paragraph [0017] - paragraph [0023] * * paragraph [0028] * * paragraph [0030] * * paragraph [0059] * * paragraph [0112] * * paragraph [0115] * * figures 2,3 * | 1-9 | H04N |

-/--

The present search report has been drawn up for all claims

| Place of search | Date of completion of the search | Examiner |
|---|---|---|
| The Hague | 2 February 2009 | Fantini, Federico |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

Europäisches
Patentamt

European
Patent Office

Office européen
des brevets

**EUROPEAN SEARCH REPORT**

Application Number

EP 08 30 5454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/051390 A (THOMSON LICENSING SA [FR]; DIEHL ERIC [FR]) 17 June 2004 (2004-06-17) * abstract * * page 1, line 17 - line 28 * * page 2, line 9 - line 22 * * page 4, line 6 - line 10 * * figure 2 * | 1-9 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 2 February 2009 | Fantini, Federico |

EPO FORM 1503 03.82 (P04C01)

**ANNEX TO THE EUROPEAN SEARCH REPORT
ON EUROPEAN PATENT APPLICATION NO.**

EP 08 30 5454

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2009

| Patent document cited in search report | | Publication date | Patent family member(s) | | Publication date |
|---|---|---|---|---|---|
| EP 0683614 | A | 22-11-1995 | EP | 0679029 A1 | 25-10-1995 |
| EP 1370083 | A | 10-12-2003 | CN | 1457600 A | 19-11-2003 |
| | | | WO | 02071752 A1 | 12-09-2002 |
| | | | JP | 2002330126 A | 15-11-2002 |
| | | | US | 2003149890 A1 | 07-08-2003 |
| US 2004054892 | A1 | 18-03-2004 | CN | 1473435 A | 04-02-2004 |
| | | | DE | 60215033 T2 | 10-05-2007 |
| | | | EP | 1430720 A1 | 23-06-2004 |
| | | | WO | 03021965 A1 | 13-03-2003 |
| WO 2004051390 | A | 17-06-2004 | AU | 2003302511 A1 | 23-06-2004 |

EPO FORM P0459

For more details about this annex : see Official Journal of the European Patent Office, No. 12/82